# EUROPEAN PATENT SPECIFICATION

(11) **EP 3 196 629 B1**
(45) Date of publication and mention of the grant of the patent: **26.08.2020**
(21) Application number: 15841446.6
(22) Date of filing: 13.04.2015
(51) Int. Cl.: G01N 1/22, G01N 1/40, G01N 30/08, A24C 5/34

(54) **SMOKING MACHINE COLLECTING DEVICE AND METHOD FOR USING SAME TO ANALYZE CIGARETTE SMOKE**
SAMMELVORRICHTUNG FÜR RAUCHMASCHINE UND VERFAHREN ZUR VERWENDUNG DAVON ZUR ANALYSE VON ZIGARETTENRAUCH
DISPOSITIF DE COLLECTE DE MACHINE À FUMER ET PROCÉDÉ D'UTILISATION DE CE DISPOSITIF POUR ANALYSER LA FUMÉE DE CIGARETTE

(30) Priority: 19.09.2014 CN 201410489403; 19.09.2014 CN 201410481786
(43) Date of publication of application: 26.07.2017
(73) Proprietor: China National Tobacco Quality Supervision & Test Center, Zhengzhou, Henan 450001 (CN)
(72) Inventor: HU, Qingyuan, Zhengzhou Henan 450001 (CN); ZHANG, Hongfei, Zhengzhou Henan 450001 (CN); LI, Xue, Zhengzhou Henan 450001 (CN); ZHU, Fengpeng, Zhengzhou Henan 450001 (CN); PANG, Yongqiang, Zhengzhou Henan 450001 (CN); LUO, Yanbo, Zhengzhou Henan 450001 (CN); JIANG, Xingyi, Zhengzhou Henan 450001 (CN); CHEN, Zaigen, Zhengzhou Henan 450001 (CN); HOU, Hongwei, Zhengzhou Henan 450001 (CN); XIN, Baojun, Zhengzhou Henan 450001 (CN); HUANG, Weidong, Zhengzhou Henan 450001 (CN); CHANG, Cheng, Zhengzhou Henan 450001 (CN); ZENG, Bo, Zhengzhou Henan 450001 (CN); NIU, Gang, Zhengzhou Henan 450001 (CN); REN, Jingxia, Zhengzhou Henan 450001 (CN); MENG, Ke, Zhengzhou Henan 450001 (CN)
(74) Representative: Schiweck Weinzierl Koch Patentanwälte Partnerschaft mbB
(86) International application number: PCT/CN2015/076485
(87) International publication number: WO 2016/041347

(56) References cited:
- EP-A1- 0 816 823
- CN-A- 101 339 103
- CN-A- 102 155 539
- CN-A- 104 266 870
- CN-A- 104 266 877
- CN-U- 201 518 020
- CN-U- 203 249 803
- CN-Y- 200 982 968
- CN-Y- 201 429 591
- GB-A- 2 424 484
- US-A- 4 362 047
- US-A- 4 589 775
- US-A1- 2008 092 629
- US-A1- 2013 032 170

## Description

### FIELD OF THE INVENTION

The present invention relates to the field of cigarette smoke analysis and detection technology, and more particularly, to a smoke collecting device for a smoke capturing machine and a method for using the same to analyze cigarette smoke.

### BACKGROUND OF THE INVENTION

With further development of smoking and health research, people are increasingly concerned about the harmful ingredients in cigarette smoke. Cigarette mainstream smoke contains a large number of volatile organic compounds. There are five kinds of volatile organic compounds listed in the list of 44 species of harmful organic compounds listed in the Canadian Health Department, that is: 1,3-butadiene, isoprene, acrylonitrile, benzene and toluene. 1,3-butadiene and isoprene are carcinogenic by IARC as human carcinogens (2B); benzene is human carcinogen and its carcinogenicity is "sufficient animal experiment and human experimental data " (Group1); acrylonitrile is classified by IARC as a carcinogen, which belongs to " limited animal experiments and human experimental data"; toluene may irritate the skin and mucous membrane and apply an anesthesia effect on the central nervous system, and long-term exposure under toluene may also cause cancer. Therefore, the effective capture and accurate determination of volatile organic compounds in cigarette smoke has practical significance for smoking and health research. At present many have used GC-MS to measure volatile organic compounds in cigarette smoke mainly by cold solution absorption method (about -70°C methanol) and adsorption tube method to capture. Cold solution absorption method uses two collection bottles with 15mL cold methanol and connected in series to collect, which causes the operation cumbersome. As for the adsorption tube method, smoking collecting device suction channel "dead volume" occurs and the pressure drop is larger so that the test results are less reproducible.

The Chinese patent application CN 201 518 020 U an experimental device capable of simulating a composite filter plug is known, comprising a transparent sleeve in close combination with a front cover of a cigarette collector, a cigarette gripping unit arranged on the front end in the sleeve, a transparent circular hollow cavity unit filled with additive material in the middle; wherein the center axles of the gripping unit, the hollow cavity and the collector are in same line. The composite filter plug is capable of actually simulating many structures, such as a binary composite filter plug, a ternary composite filter plug with high measurement accuracy. The shape after filling the additive material is cylindrical and same to the circle of the filter plug and during pumping, the movement trail and the retention state of the fume are close to the state in the actual composite filter plug, therefore the harmful-substance reducing effect is more actually evaluated after the additive material is applied on the cigarette filter plug The device can be directly in end-joint with the collector with less interface, short tube and small system test error. The transparent material is used to directly observe the stacking state of the additive material and the absorption condition of the tar on the device wall.

### SUMMARY OF THE INVENTION

In order to overcome the drawbacks of the prior art, there is provided a smoke collecting device for a smoke capturing machine and a method for analyzing cigarette smoke using the device. The device according to the present invention has the advantages of simple operation and good repeatability, low consumption of organic solvent, no significant difference between the test result and the standard method, and can achieve the capture of the volatile organic compound at room temperature and is suitable for large-volume sample analysis.

The above object of the present invention is achieved by the following technical solution.

On one hand, a smoke collecting device for a smoke capturing machine comprises an adsorption block, an artificial lip holder, an artificial lip, a front collector cover, a back collector cover and an adsorption block retainer; wherein the artificial lip is provided in an internal portion of the artificial lip holder; a front end of the front collector cover is inserted in the artificial lip holder and presses against the artificial lip, and a rear end of the front collector cover has a first recess; a front end of the back collector cover is received in the first recess, and a rear end of the back collector cover has a second recess; the adsorption block retainer is received in the first recess, and is provided with a hollow inner cavity in which the adsorption block is located; and the internal portions of the front collector cover and the back collector cover jointly form a collecting cavity for collecting smoke, and the front end of the collecting cavity is connected to the adsorption block. The adsorption block is an adsorption tube, the adsorption tube comprises an outer tube, an adsorption block for the adsorption tube, a tapered interface and a gasket, wherein the outer tube is a hollow cylinder, the adsorption block for the adsorption tube is located inside the outer tube, the tapered interface is a hollow cylinder in which the inner cavity is tapered, the mouth end connects with the outer tube side, wherein the gasket is a hollow cylinder that is located inside the tapered interface and abuts against the adsorption block for the adsorption tube

Preferably, the smoke collecting device further comprises a Cambridge filter, which is provided at the junction of the front collector cover and the back collector across the collecting cavity.

Preferably, a first gasket having a through hole is provided in the front collector cover, a front surface of the first gasket is connected to a cigarette holder and a rear surface of the first gasket is connected to the front end of the adsorption block retainer.

Preferably, the collecting cavity has a rhombic cavity shape.

Preferably, the adsorption block comprises a solid adsorbent material and two side sieve plates, wherein the solid adsorbent material is disposed between the two side sieve plates.

Preferably, a second gasket having a through hole is provided between the collecting cavity and one of the two side sieve plates adjacent to the collecting cavity side.

Preferably, the adsorbent material in the adsorption block is an activated carbon material, a magnetic adsorbent material or a molecular sieve material, its particle size is of 40-80 µm; each of the two side sieve plates is a sand core sieve plate having an aperture of 40-60 µm.

Preferably, the middle of the adsorption block for the adsorption tube is a solid adsorbent material; respective one of the two sieve plates are provided on both sides of the solid adsorbent material; the adsorbent material is an activated carbon material, a magnetic adsorbent material or a molecular sieve material, wherein the adsorbent material has a particle size of 40 to 80 µm, each of the two side sieve plates of the adsorbent material is a s sand core sieve plate having an aperture of 40-60 µm.

On the other hand, the present invention provides a method for analyzing volatile organic compounds in cigarette smoke by using the above smoke collecting device, wherein the method comprises the following steps:
Step 1, performing sample balance according to GB/T 16447 standard conditions to select cigarettes with (average quality ± 0.02) g and (average suction resistance ± 50) Pa for sample testing;
Step 2, mounting the smoke collecting device on the smoke capturing device, and sucking one cigarette at a time;
Step 3, removing the smoke collecting device after the capture, and transferring the adsorbent block to a vessel for extraction;
Step 4, mounting a blank sample in the smoke collecting device, sucking one cigarette at a time and repeating the step 3, and comparing the results of the blank sample processing and those of the cigarette sample to analyze volatile organic compounds in cigarette smoke.

The technical solution of the invention can also be described as follows:
The present invention provides a smoke collecting device, which comprises:
an adsorption device, which can be in detachable connection with a clamping device for clamping the cigarette holder and inside which an adhesive material is placed to adsorb substances in cigarette smoke, such as volatile organic compounds; and
a capture chamber with two open ends, wherein one end of the capture chamber is in sealing communication with said adsorption device so as to allow the smoke passing through said adsorption device to enter, the other end of the capture chamber is communicated with a smoke suction pump.

The device also includes a holding device. That is to say, the smoke collecting device includes:
a holding device for holding cigarettes;
an adsorption device in sealing communication with said holding device and inside of which an adhesive material is placed to adsorb substances in cigarette smoke, such as volatile organic compounds; and
a capture chamber with two open ends, wherein one end of the capture chamber is in sealing communication with said adsorption device so as to allow the smoke passing through said adsorption device, the other end of the capture chamber is communicated with the smoke suction pump.

The smoke suction pump pumps gases during operation. Cigarette smoke enters into the adsorption device. The substances in the smoke such as the volatile organic compounds are absorbed by the adsorbent material inside the adsorption device, and the unabsorbed substance is pumped out by the smoke suction pump through the capture chamber. The composition of the cigarette smoke is measured by detecting the composition and contents of the substances in the adsorbent material inside the adsorption device.

Preferably, the holding device, the adsorption device and the capture chamber are provided in an integral or detachable manner, preferably a detachable manner. When the holding device, the adsorption device and the capture chamber are detachable, the adsorption device is easily removed to determine the composition and content of the adsorption material.

Preferably, when the holding device, the adsorption device and the capture chamber are detachably provided, gaskets are provided between the holding device, the adsorption device and the capture chamber, so as to ensure that these three are communicated with each other while remaining seal from the outside.

Preferably, when the holding device, the adsorption device and the capture cavity are integrally provided, the adsorption device is provided with a lid that can be opened and closed, to remove or replace the adsorption materials in the adsorption device.

The holding device includes an artificial lip and an artificial lip gripper. The artificial lip is used to hold the cigarettes, disposed inside the artificial lip gripper and clamped by the artificial lip gripper.

Preferably, the adsorption device is also provided with two side sieve plates therein, the adsorption material inside the adsorption device are placed between the two side sieve plates; preferably, the two side sieve plates are sandstone sieve plates each with 40-60 µm aperture.

Preferably, the adsorbent materials inside the adsorption device are solid adsorbent materials, preferably, activated carbon materials, magnetic materials or molecule sieve materials; and preferably, an adsorbent particle size of the material is 40-80 µm.

The adsorption device is provided with a sorbent tube therein, which includes an outer tube, and absorbent material is placed inside the outer tube. When such the sorbent tube is used, the sorbent tube can be removed directly and conveniently during replacement or removal of the adsorption material. Preferably, the outer tube of the sorbent tube is provided with two side sieve-plates therein, absorption materials are placed between the two side sieve plates; preferably, each of the two side sieve plates is a sand core sieve plate having an aperture of 40-60 µm.

Preferably, the smoke collecting device includes a Cambridge filter, which is disposed in the capture chamber.

Preferably, the capture chamber has a volume of 10∼20mL and a shape of double cone chamber that is a chamber formed by adhering the same two cones at side to side and back to back and has open ends at both ends (i.e., the narrow end is the open end), wherein one end is communicated with the adsorption material and the other end is communicated with the pump. Preferably the Cambridge filter is disposed on a maximum circular cross-section of the double cone chamber.

On the other hand, the present invention provides a method for analyzing a volatile organic compound in a cigarette smoke using the aforementioned smoke collecting device for a smoke capturing machine, the method comprises the following steps:
Step 1, picking up cigarette samples, and performing sample balance to select (average quality ± 0.02) g and (average suction resistance ± 50) Pa of cigarettes for sample testing according to GB/T 16447 standard conditions, wherein the average quality and average suction resistance are average values of qualities and suction resistances of one more than 50 cigarettes for one brand;
Step 2, mounting the smoke collecting device on the smoke capturing machine, sucking one cigarette at a time;
Step 3, removing the smoke collecting device after the capture, transferring adsorbent material inside an adsorption device of the smoke collecting device to a vessel for extraction; and
Step 4, mounting a blank sample in the smoke collecting device, sucking one cigarette at a time and repeating the step 3, comparing the results of the blank sample processing with those of the cigarette sample to analyze volatile organic compounds in cigarette smoke.

Compared with the prior art, the present invention has at least the following advantageous technical effects:
1. The present invention employs a new type of smoke collecting device, which is added with an inner cavity containing solid adsorbent material in the front cover of the collector as compared with the conventional capturing device, so that the escape of smoke is relaxed and residence time in the collector is prolonged, and the adsorbent material between the sieve plates has a good adsorption effect on the volatile organic compounds in cigarette smoke, which can make cigarette smoke gas flow to fully contact with adsorbent, to ensure that the relevant components of cigarette smoke is to be effectively absorbed, and meet requirements for the analysis of volatile organic compounds in cigarette smoke.
2. When the smoke collecting device of the present invention employs the detachable type, an adsorption device containing an adsorbent material or an adsorption tube provided with an adsorbent material and disposed inside the adsorption device can be directly removed, so that it is convenient to remove the adsorbent material or replace the adsorbent material therein.
3. When a Cambridge filter is provided in the smoke collecting device of the present invention, since the Cambridge filter is provided between the adsorbent material and the pump, the cigarette smoke first passes through the adsorption material and then through the Cambridge filter, therefore the adsorption material will fully adsorb the volatile organic compounds in the smoke, so that the determination results are more accurate.
4. When the capture chamber of the present invention is a double cone chamber, the two ends of the double cone are open ends, one end is in communication with the adsorbent material and the other end is in communication with the pump. With such a structure, the smoke from the adsorbent material will be buffered in the cone and then pass through the Cambridge filter and be sucked out, and will not directly penetrate the Cambridge filter.

### BRIEF DESCRIPTION OF THE DRAWINGS

Figure 1 illustrates a diagram of a straight-line smoke collecting device with an inner cavity;
Figure 2 illustrates a diagram of an adsorption block;
Figure 3 illustrates a diagram of a smoke collecting device with an adsorption tube.
Figure 4 illustrates a diagram of an adsorption tube;
Figure 5 illustrates a suction curve for different volume cavities.

### DETAILED DESCRIPTION OF THE EMBODIMENTS

The technical description of the present invention will be further described in details in combination with specific examples.

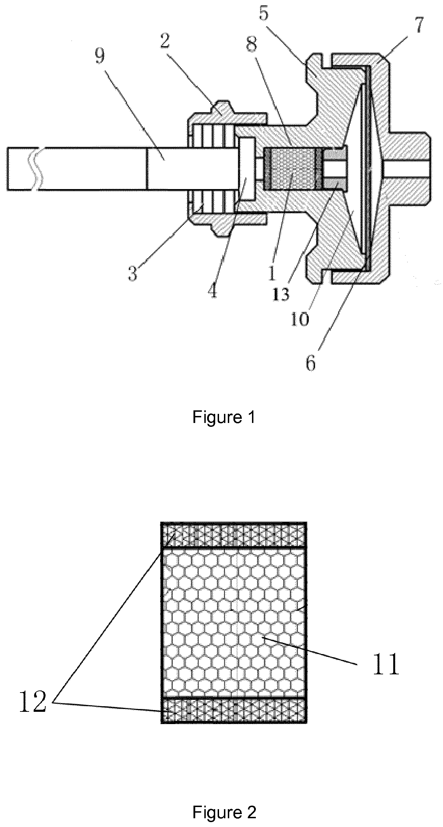

Figure 1 shows a smoke collecting device for a smoke capturing machine. The device comprises an adsorption block 1, an artificial lip holder 2, an artificial lip 3, a front collector cover 5, a back collector cover 7 and an adsorption block retainer 8. According t the present invention, the artificial lip 3 is provided in an internal portion of the artificial lip holder 2, and a front end of the front collector cover 5 is inserted in the artificial lip holder 2 and presses against the artificial lip. A rear end of the front collector cover 5 has a first recess, and a front end of the back collector cover 7 is received in the first recess. A rear end of the back collector cover 7 has a second recess. The adsorption block retainer 8 is received in the first recess and is provided with a hollow inner cavity, in which the adsorption block 1 is located. The internal portions of the front collector cover 5 and the back collector cover 7 jointly form a collecting cavity 10 for collecting smoke. A front end of the collecting cavity is connected to the adsorption block retainer 8 and communicates with cigarettes 9 inserted in the artificial lip 3. According to the smoke collecting device of the present invention with the above structure, it is possible to allow the cigarette smoke to adsorb the volatile organic compounds in the cigarette smoke through the adsorption block provided at the rear end of the collecting device, so that the cigarette smoke flow and the adsorbent in the adsorption block fully contact with each other to ensure that the relevant components in the cigarette smoke is effectively absorbed to meet analysis requirements for the volatile organic compounds in the cigarette smoke.

According to the present invention, the smoke collecting device further comprises a Cambridge filter 6, which is provided at a junction of the front collector cover 5 and the back collector cover 7 across the collecting cavity 10.

According to a preferred embodiment of the present invention, a first gasket 4 having a through hole is provided in the front collector cover 5. A front surface of the first gasket 4 is connected to the cigarette holder 9 and a rear surface of the first gasket 4 is connected to the front end of the adsorption block retainer 8.

According to an example of the present invention as shown in Fig. 1, the collecting cavity 10 has a rhombic cavity shape. However, the shape is merely exemplary herein, and the shape of the collecting cavity is not limited thereto and any shape commonly used in the art may be employed.

Next, the structure of the adsorption block will be described with reference to Fig 2. The adsorption block 1 comprises a solid adsorbent material 11 and two side sieve plates 12, wherein the solid adsorbent material 11 is provided between the two side sieve plates 12. A second gasket 13 having a through hole is provided between the collecting cavity 10 and the two side sieve plates 12.

The adsorbent material 11 in the adsorption block 1 is an activated carbon material, a magnetic adsorbent material or a molecular sieve material, whose particle size is of 40-80 µm. The two side sieve plates 12 each is a sand core sieve plate having an aperture of 40-60 µm.

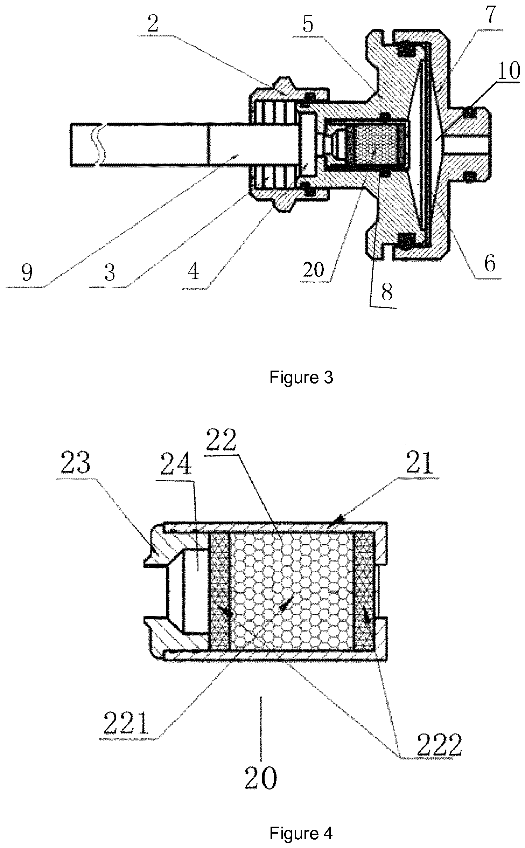

According to another embodiment of the present invention as shown in Fig. 3, the adsorption block retainer 8 is provided with a hollow inner cavity 4, in which an adsorption tube 20 is located. The adsorption tube 20 comprises an outer tube 21, an adsorption block 22 for the adsorption tube, a tapered interface 23 and a gasket 24, wherein the outer tube 21 is a hollow cylinder, and the adsorption block 22 is located inside the outer tube 21. The tapered interface 23 is a hollow cylinder in which the inner cavity is tapered. A wide end of the inner cavity connects with the outer tube 21 side, wherein the gasket 24 is a hollow cylinder, which is located inside the tapered interface 23 and abuts against the adsorption block 22.

Figure 4 shows that the middle of the adsorption block 22 is a solid adsorbent material 221, both sides of the solid adsorbent material 221 are provided with respective sieve plate 222; the adsorbent material 221 is an activated carbon material, a magnetic adsorbent material or a molecular sieve material, wherein the adsorbent material has a particle size of from 40 to 80 µm, the two side sieve plates 222 of the adsorbent material each is a sand core sieve plate having an aperture of 40-60 µm.

A method for analyzing volatile organic compounds in cigarette smoke comprises the following steps:
Step 1, processing cigarette samples, wherein the cigarette samples are picked up, sample balance is performed according to GB/T 16447 standard conditions, and (average quality ± 0.02) g and (average suction resistance ± 50) Pa of cigarettes are selected for sample testing;
Step 2, mounting the straight-line smoke collecting device on the smoke capturing device, and sucking one cigarette at a time;
Step 3, removing the smoke collecting device after the capture, and transferring the adsorbent block 1 to a vessel for extraction; and
Step 4, mounting a blank sample in the smoke collecting device, sucking one cigarette at a time and repeating step 3, comparing the results of the blank sample processing with those of the cigarette sample to analyze volatile organic compounds in cigarette smoke.

The cigarettes 9 inside the artificial lip 3 generate smoke during suction. The smoke passes through the adsorbent block 1 and into the Cambridge filter 6. The adsorption block 1 comprises a solid adsorbent material 11 and two side sieve plates 12, wherein the solid adsorbent material 11 is provided between the two side sieve plates 12. The adsorbent material 11 in the adsorption block 1 is an activated carbon material, a magnetic adsorbent material or a molecular sieve material, whose particle size is of 40-80 µm. The two side sieve plates 12 each is a sand core sieve plate having an aperture of 40-60 µm. The smoke passes through a front sieve plate of the two side sieve plates and is divided into strands of small gas flows, is buffered by the activated carbon material and then flows out of a rear sieve plate. The relative components in the smoke are efficiently absorbed during this process.

A gas chromatography/mass spectrometry (GC/MS) instrument conditions according to the analytical method of the present invention are listed below: Inert Cap AQUATIC-2 column chromatography column (length: 60M, ID: 0.25mm, thickness: 1.4 µm); Programmed temperature procedures: the initial temperature is 40 °c, Keep 6.0min, 20°c/min heating rates rising to 230°c, keep 10min; Carrier gas is helium flow rate is 1.5mL / min; Inlet temperature is 180 °c and 1.0 µl sample volume, split ratio is 10:1; Transmission line temperature 230°c, ion source temperature 230°c, quadrupole temperature 150°c; Mass spectrometry ionization voltage of 70eV; Scanning mode: full scan and selected ion mode simultaneously.

**Table 1 Retention times quantification and qualitative ions for each target compound**

| **Compounds** | **Retention time** | **Quantitative ions** | **Qualitative ion** |
|---|---|---|---|
| | | | |
| D6-benzene (internal standard) | 11.55 | 84 | 83 |
| 1,3-butadiene | 4.84 | 54 | 53 |
| Isoprene | 7.12 | 67 | 68 |
| Acrylonitrile | 9.30 | 53 | 53 |
| benzene | 11.60 | 78 | 77 |
| Toluene | 13.38 | 91 | 92 |

Next, the method of analyzing a volatile organic compound in a cigarette smoke by using the smoke collecting device of the present invention will be exemplified by an example.

### Example 1

Brand **A** cigarettes are selected, performed sample balance in accordance with GB/T 16447 standard conditions, (average mass ± 0.02) g and (average suction resistance ± 50) Pa for cigarettes are picked up for sample testing. The ready collecting device is installed on the smoke capturing machine, performs suction under ISO standard conditions, and the suction capacity is of 35.0 mL, suction time is 2s, suction frequency is of 60s and one cigarette is sucked at a time. The collecting device is removed after sucking and collecting cigarettes, the adsorbent material and the front and rear sieve plates are transferred to the corresponding containers for extraction.

The same process is applied on blank samples. The results are shown in Table 2.

**Table 2 Determination of volatile organic compounds in cigarettes of brand A - ISO mode**

| **Compounds** | 1,3-butadiene | Isoprene | Acrylonitrile | benzene | Toluene |
|---|---|---|---|---|---|
| **content (µg/cig)** | 10.9 | 101.1 | 1.7 | 15.3 | 21.0 |
| **RSD (%) n=5** | 3.95 | 1.73 | 7.15 | 2.53 | 4.65 |

### Example 2

Brand **B** cigarettes are selected, performed sample balance in accordance with GB/ T 16447 standard conditions, (average mass ± 0.02) g and (average suction resistance ± 50) Pa for cigarettes are picked up for sample testing. The ready collecting device is installed on the smoke capturing machine, performs suction under Health Canada intense (HCI) standard conditions, suction capacity is of 55.0 mL, suction time is 2s, suction frequency is of 30s and one cigarette is sucked at a time. The collecting device is removed after sucking and collecting cigarettes, the adsorbent material and the front and rear sieve plates are transferred to the corresponding containers for extraction.

The same process is applied on blank samples. The results are shown in
Table 3.

**Table 3 Determination of volatile organic compounds in cigarettes of brand B - ISO mode**

| **Compounds** | 1,3-butadiene | Isoprene | Acrylonitrile | benzene | Toluene |
|---|---|---|---|---|---|
| **content (µg/cig)** | 82.6 | 804.3 | 21.1 | 77.8 | 143.9 |
| **RSD (%)** | 4.05 | 4.57 | 7.01 | 4.51 | 4.16 |

### Example 3

Brand **C** cigarettes are selected, performed sample balance in accordance with GB/T 16447 standard conditions, (average mass ± 0.02) g and (average suction resistance ± 50) Pa for cigarettes are picked up for sample testing. The device according to the invention (a Cambridge filter is set between the adsorbent material and the pump, the device as shown in Figure 1) and a means for providing an adsorbent material between the Cambridge filter and the pump respectively perform suction under ISO standard conditions, suction capacity is of 35.0mL, suction time is 2s, suction frequency is of 60s and one cigarette is sucked at a time. The collecting device is removed after sucking and collecting cigarettes, the adsorbent material and the front and rear sieve plates are transferred to the corresponding containers for extraction.

The same process is applied on blank samples. The technical effects of both devices are compared with each other. The results are shown in Table 4.

**Table 4 Comparison of the effects of two units tested for volatile organic compounds**

| **Compounds** | 1,3-butadiene | Isoprene | Acrylonitrile | benzene | Toluene |
|---|---|---|---|---|---|
| **The device of the present invention (µg/rig)** | 38.4 | 299.0 | 7.8 | 42.9 | 70.4 |
| **The adsorbent material is provided after the filter (µg/cig)** | 34.8 | 278.7 | 7.5 | 40.4 | 69.0 |
| **Deviation (%)** | 5.0 | 3.5 | 1.7 | 2.9 | 1.0 |

The results of the above table show that the present invention provides a relatively good adsorption effect of the Cambridge filter disposed between the adsorbent material and the pump.

### Example 4

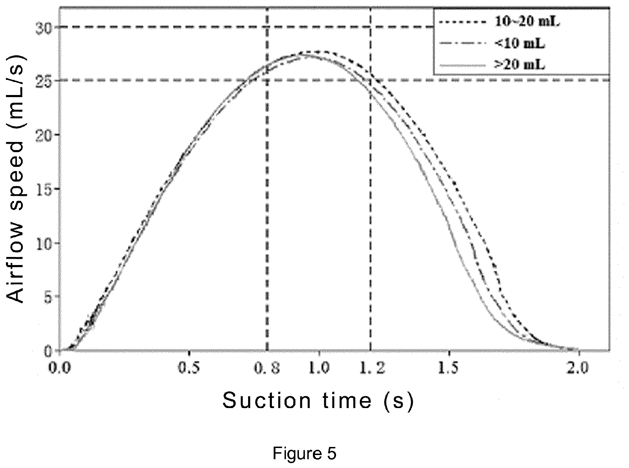

The present embodiment uses the apparatus shown in Fig. 1 in which different collecting cavity sizes are used, for example, 10-20 mL, < 10 mL, >20 mL. The results of effect of collecting cavity sized on testing results are shown in Fig.5. According to Fig. 5, the size of the collecting cavity mainly affects the cigarette suction curve and then impacts the test results. A collecting cavity volume should be minimized under meeting the processing needs, it is recommended to be limited between 10 ∼ 20ml. If the volume is too large or too small, it will have an impact on the suction curve.

Since the present invention adopts a new type of smoke collecting device, as compared with conventional absorption devices, the device according to the present invention is added with an inner cavity containing solid adsorbent material in the front cover of the collector as compared with the conventional capturing device, so that the escape of smoke is relaxed and residence time in the collector is prolonged, and the adsorbent material between the sieve plates has a good adsorption effect on the volatile organic compounds in cigarette smoke, which can make cigarette smoke gas flow to fully contact with adsorbent, to ensure that the relevant components of cigarette smoke is to be effectively absorbed, and meet requirements for the analysis of volatile organic compounds in cigarette smoke. Five types of volatile organic compounds are detected to be limited to 0.03 µg/cig ∼ 0.08 µg/cig and recovery rates are between 97.6%∼107.8%. The device of the invention is simple in operation, and has a good determination of reproducibility, low consumption of organic solvents, there was no significant difference between the test results and the standard method, and can be carried out at room temperature on the evaporation of volatile organic compounds suitable for large quantities of sample analysis.

## Claims

1. A smoke collecting device for a smoke capturing machine comprising an adsorption block (1), an artificial lip holder (2), an artificial lip (3), a front collector cover (5), a back collector cover (7) and an adsorption block retainer (8), wherein the artificial lip (3) is provided in an internal portion of the artificial lip holder (2); a front end of the front collector cover (5) is inserted in the artificial lip holder (2) and presses against the artificial lip, and a rear end of the front collector cover (5) has a first recess; a front end of the back collector cover (7) is received in the first recess, and a rear end of the back collector cover (7) has a second recess; the adsorption block retainer (8) is received in the first recess, and is provided with a hollow inner cavity; the adsorption block (1) is located in the hollow inner cavity; and the internal portions of the front collector cover (5) and the back collector cover (7) jointly form a collecting cavity (10) for collecting smoke, and a front end of the collecting cavity is connected to the adsorption block;
**characterized in that** the adsorption block (1) is an adsorption tube (20) comprising an outer tube (21), an adsorption block (22) for the adsorption tube, a tapered interface (23) and a gasket (24), wherein the outer tube (21) is a hollow cylinder, the adsorption block (22) is located inside the outer tube (21), the tapered interface (23) is a hollow cylinder of which an inner cavity is tapered, a wide end of the inner cavity connects with the outer tube (21) side, wherein the gasket (24) is a hollow cylinder, which is located inside the tapered interface (23) and abuts against the adsorption block (22).

2. The device according to claim 1, **characterized in that** the smoke collecting device further comprises a Cambridge filter (6), the Cambridge filter (6) is provided at the junction of the front collector cover (5) and the back collector cover (7) across the collecting cavity (10).

3. The device according to claim 1, **characterized in that** a first gasket (4) having a through hole is provided in the front collector cover (5), a front surface of the first gasket is connected to the cigarette holder (9) and a rear surface of the first gasket is connected to the front end of the adsorption block retainer (8).

4. The device according to claim 1, **characterized in that** the Collecting cavity (10) has a rhombic cavity shape.

5. The device according to claim 1, **characterized in that** the adsorption block (1) comprises a solid adsorbent material (221) and two side sieve plates (222), wherein a solid adsorbent material (211) is provided between the two side sieve plates (222).

6. The device according to any of claims 5, **characterized in that** the adsorbent material (221) in the adsorption block (1) is an activated carbon material, a magnetic adsorbent material or a molecular sieve material, its particle size is of 40-80 µm; the two side sieve plates (222) each is a sand core sieve plate having an aperture of 40-60 µm.

7. A method for analyzing volatile organic compounds in cigarette smoke by using the smoking collecting device according to any of claims 1 to 8, wherein the method comprises the following steps:
Step 1, picking up cigarettes samples, performing sample balance according to GB/T 16447 standard conditions, and selecting average quality ± 0.02 g and average suction resistance ± 50 Pa of cigarettes for sample testing;
Step 2, mounting the smoke collecting device on the smoke capturing machine, and sucking one cigarette at a time;
Step 3, removing the smoke collecting device after the capture, and transferring the adsorbent block to a vessel for extraction; and
Step 4, mounting a blank sample in the smoke collecting device, sucking one cigarette at a time and repeating step 3, comparing the results of the blank sample processing with those of the cigarette sample to analyze volatile organic compounds in cigarette smoke.

## Patentansprüche

1. Rauchsammelvorrichtung für eine Rauchabfangmaschine mit einem Adsorptionsblock (1), einem Halter (2) für künstliche Lippen, einer künstlichen Lippe (3), einer vorderen Kollektorabdeckung (5), einer hinteren Kollektorabdeckung (7) und einem Adsorptionsblockhalter (8), wobei die künstliche Lippe (3) in einem inneren Abschnitt des Halters (2) für künstliche Lippen vorgesehen ist; ein vorderes Ende der vorderen Kollektorabdeckung (5) in den Halter (2) für künstliche Lippen eingesetzt ist und gegen die künstliche Lippe drückt und ein hinteres Ende der vorderen Kollektorabdeckung (5) eine erste Aussparung aufweist; ein vorderes Ende der hinteren Kollektorabdeckung (7) in der ersten Aussparung aufgenommen ist und ein hinteres Ende der hinteren Kollektorabdeckung (7) eine zweite Aussparung aufweist; der Adsorptionsblockhalter (8) in der ersten Aussparung aufgenommen ist und mit einem hohlen inneren Hohlraum versehen ist; der Adsorptionsblock (1) in dem hohlen inneren Hohlraum angeordnet ist; und die inneren Teile der vorderen Kollektorabdeckung (5) und der hinteren Kollektorabdeckung (7) zusammen einen Sammelhohlraum (10) zum Sammeln von Rauch bilden und ein vorderes Ende des Sammelhohlraums mit dem Adsorptionsblock verbunden ist;
**dadurch gekennzeichnet, dass** der Adsorptionsblock (1) ein Adsorptionsrohr (20) ist, das ein Außenrohr (21), einen Adsorptionsblock (22) für das Adsorptionsrohr, eine sich verjüngende Grenzfläche (23) und eine Dichtung (24) aufweist, wobei das Außenrohr (21) ein Hohlzylinder ist und der Adsorptionsblock (22) im Inneren des Außenrohrs (21) angeordnet ist, die sich verjüngende Grenzfläche (23) ein Hohlzylinder ist, von dem ein innerer Hohlraum verjüngt ist, wobei ein breites Ende des inneren Hohlraums mit der Seite des äußeren Rohrs (21) verbunden ist, wobei die Dichtung (24) ein Hohlzylinder ist, der sich innerhalb der sich verjüngenden Grenzfläche (23) befindet und an den Adsorptionsblock (22) anstößt.

2. Vorrichtung nach Anspruch 1, **dadurch gekennzeichnet, dass** die Rauchsammelvorrichtung ferner einen Cambridge-Filter (6) aufweist, wobei der Cambridge-Filter (6) an der Verbindung der vorderen Kollektorabdeckung (5) und der hinteren Kollektorabdeckung (7) über dem Sammelraum (10) bereitgestellt ist.

3. Vorrichtung nach Anspruch 1, **dadurch gekennzeichnet, dass** eine erste Dichtung (4) mit einem Durchgangsloch im vorderen Kollektordeckel (5) vorgesehen ist, eine vordere Fläche der ersten Dichtung mit dem Zigarettenhalter (9) verbunden ist und eine hintere Fläche der ersten Dichtung mit dem vorderen Ende des Adsorptionsblockhalters (8) verbunden ist.

4. Vorrichtung nach Anspruch 1, **dadurch gekennzeichnet, dass** der Sammelhohlraum (10) die Form eines rautenförmigen Hohlraums hat.

5. Vorrichtung nach Anspruch 1, **dadurch gekennzeichnet, dass** der Adsorptionsblock (1) ein festes Adsorptionsmaterial (221) und zwei seitliche Siebplatten (222) aufweist, wobei ein festes Adsorptionsmaterial (211) zwischen den beiden seitlichen Siebplatten (222) vorgesehen ist.

6. Vorrichtung nach einem der Ansprüche 5, **dadurch gekennzeichnet, dass** das Adsorptionsmaterial (221) im Adsorptionsblock (1) ein Aktivkohlematerial, ein magnetisches Adsorptionsmaterial oder ein Molekularsiebmaterial ist, dessen Teilchengröße 40-80 µm beträgt; jede der beiden Seitensiebplatten (222) jeweils eine Sandkernsiebplatte mit einer Öffnung von 40-60 µm ist.

7. Verfahren zum Analysieren von flüchtigen organischen Verbindungen in Zigarettenrauch unter Verwendung der Rauchsammelvorrichtung nach einem der Ansprüche 1 bis 8, wobei das Verfahren die folgenden Schritte umfasst:
Schritt 1, Aufnehmen von Zigarettenproben, Durchführen des Probenausgleichs gemäß den GB/T 16447-Standardbedingungen und Auswählen der durchschnittlichen Qualität ± 0,02 g und des durchschnittlichen Ansaugwiderstands ± 50 Pa von Zigaretten für den Probetest;
Schritt 2, Anbringen der Rauchsammelvorrichtung an der Rauchauffangmaschine und Ansaugen einer Zigarette nach der anderen;
Schritt 3, Entfernen der Rauchsammelvorrichtung nach dem Einfangen und Überführen des Adsorptionsmittelblocks in ein Gefäß zum Extrahieren; und
Schritt 4, Anbringen einer Leerprobe in der Rauchauffangvorrichtung, Ansaugen einer Zigarette nach der anderen und Wiederholen von Schritt 3, Vergleichen der Ergebnisse der Verarbeitung der Leerprobe mit denen der Zigarettenprobe, um flüchtige organische Verbindungen im Zigarettenrauch zu analysieren.

## Revendications

1. Dispositif de collecte de fumée pour une machine de capture de fumée comprenant un bloc d'adsorption (1), un support de lèvre artificielle (2), une lèvre artificielle (3), un couvercle collecteur avant (5), un couvercle collecteur arrière (7) et un dispositif de retenue de bloc d'adsorption (8), dans lequel la lèvre artificielle (3) est prévue dans une partie interne du support de lèvre artificielle (2); une extrémité avant du couvercle collecteur avant (5) est insérée dans le support de lèvre artificielle (2) et presse contre la lèvre artificielle, et une extrémité arrière du couvercle collecteur avant (5) présente un premier évidement; une extrémité avant du couvercle collecteur arrière (7) est reçue dans le premier évidement, et une extrémité arrière du couvercle collec-teur arrière (7) a un second évidement; le dispositif de retenue du bloc d'adsorption (8) est reçu dans le premier évidement, et est pourvu d'une cavité intérieure creuse; le bloc d'adsorption (1) est situé dans la cavité intérieure creuse; et les parties internes du couvercle collecteur avant (5) et du couvercle collecteur arrière (7) forment conjoin-tement une cavité de collecte (10) pour collecter la fumée, et une extrémité avant de la cavité de collecte est reliée au bloc d'adsorption;
**caractérisé en ce que** le bloc d'adsorption (1) est un tube d'adsorption (20) comprenant un tube extérieur (21), un bloc d'adsorption (22) pour le tube d'adsorption, une interface conique (23) et un joint d'étanchéité (24), dans lequel le tube extérieur (21) est un cylindre creux, le bloc d'adsorption (22) est situé à l'intérieur du tube extérieur (21), l'interface conique (23) est un cylindre creux dont une cavité intérieure est conique, une large extrémité de la cavité intérieure est reliée au côté du tube extérieur (21), dans lequel le joint (24) est un cylindre creux, qui est situé à l'intérieur de l'interface conique (23) et qui est en butée contre le bloc d'adsorption (22).

2. Dispositif selon la revendication 1, **caractérisé en ce que** le dispositif de collecte de fumée comprend en outre un filtre de Cambridge (6), le filtre de Cambridge (6) est prévu à la jonction du couvercle collecteur avant (5) et du couvercle collecteur arrière (7) en travers de la cavité de collecte (10).

3. Dispositif selon la revendication 1, **caractérisé en ce qu'**un premier joint (4) ayant un trou traversant est prévu dans le couvercle collecteur avant (5), une surface avant du premier joint est reliée au porte-cigarette (9) et une surface arrière du premier joint est reliée à l'extrémité avant du bloc de retenue d'adsorption (8).

4. Dispositif selon la revendication 1, **caractérisé en ce que** la cavité collectrice (10) a une forme de cavité rhombique.

5. Dispositif selon la revendication 1, **caractérisé en ce que** le bloc d'adsorption (1) comprend un matériau adsorbant solide (221) et deux plaques de tamisage latérales (222), dans lequel un matériau adsorbant solide (211) est prévu entre les deux plaques de tamisage latérales (222).

6. Dispositif selon l'une des revendications 5, **caractérisé en ce que** le matériau adsorbant (221) dans le bloc d'adsorption (1) est un matériau de charbon actif, un matériau adsorbant magnétique ou un matériau de tamis moléculaire, sa taille de particule est de 40-80 µm; les deux plaques de tamis latérales (222) sont chacune une plaque de tamis à noyau de sable ayant une ouverture de 40-60 µm.

7. Procédé d'analyse de composés organiques volatils dans la fumée de cigarette en utilisant le dispositif de collecte de la fumée selon l'une des revendications 1 à 8, dans lequel le procédé comprend les étapes suivantes:
Etape 1, prélèvement d'échantillons de cigarettes, réalisation d'une balance d'échantillon selon les conditions standard GB/T 16447, et sélection d'une qualité moyenne ± 0,02 g et d'une résistance moyenne à l'aspiration ± 50 Pa de cigarettes pour l'analyse de l'échantillon;
Etape 2, montage du dispositif de collecte de la fumée sur la machine de capture de la fumée, et aspiration d'une cigarette à la fois;
Etape 3, retirer le dispositif de collecte de la fumée après la capture et transférer le bloc d'adsorbant dans un récipient pour l'extraction; et
Etape 4, montage d'un échantillon à blanc dans le dispositif de collecte de la fumée, aspiration d'une cigarette à la fois et répétition de l'étape 3, comparaison des résultats du traitement de l'échantillon à blanc avec ceux de l'échantillon de cigarette pour analyser les composés organiques volatils dans la fumée de cigarette.
